# EUROPÄISCHE PATENTSCHRIFT

(11) **EP 3 047 997 B1**
(45) Veröffentlichungstag und Bekanntmachung des Hinweises auf die Patenterteilung: **10.01.2018**
(21) Anmeldenummer: 15151775.2
(22) Anmeldetag: 20.01.2015
(51) Int. Cl.: B60K 15/035, B60K 15/03

(54) **Entlüftungsventil**
Venting valve
Ventilateur

(43) Veröffentlichungstag der Anmeldung: 27.07.2016
(73) Patentinhaber: Magna Steyr Fuel Systems GesmbH, 8261 Sinabelkirchen (AT)
(72) Erfinder: Binder, Michael, 8200 Gleisdorf (AT); Eggenreich, Eduard, 8160 Weiz (AT); Gorlier, Fabien, 8047 Graz (AT); Hendler, René, 8020 Graz (AT)
(74) Vertreter: Zangger, Bernd

(56) Entgegenhaltungen:
- WO-A1-86/02888
- DE-A1- 4 121 324
- DE-A1- 19 542 703
- DE-A1-102006 004 630
- US-A- 5 131 439
- US-B1- 6 302 133

## Beschreibung

### Gebiet der Erfindung

Die vorliegende Erfindung betrifft ein Entlüftungsventil für einen Kraftstoffbehälter und eine Tankvorrichtung umfassend ein solches Entlüftungsventil.

### Stand der Technik

Derartige Entlüftungsventile werden insbesondere zur Entlüftung von Kraftstofftanks in Kraftfahrzeugen eingesetzt und ermöglichen dort eine Entlüftung und Belüftung des Tanks während eines Normalbetriebs und/oder während einer Betankung, durch Schaffung einer Verbindung zur Umgebung des Tanks, also der Luft außerhalb des Tanks bzw. des Fahrzeuges. Die Verbindung zur Umgebungsluft verläuft meist über einen Aktivkohlefilter. Derartige Entlüftungsventile können an einem Einfüllstutzen des Kraftstoffbehälters angeordnet sein und beispielsweise als Ventilnippel auf einen Einfüllstutzen aufgesetzt werden.

Für Tankvorrichtungen in Fahrzeugen ist auch bekannt, dass diese eine sogenannte Roll-Over Funktion ausbilden können, also eine Verbindung des Tanks zur Umgebung bei einer bestimmten Schräglage, insbesondere bei Überschlag des Fahrzeuges, schließen können, so dass ein Austritt von Kraftstoff nach Unfällen vermieden wird.

Für Tankvorrichtungen in Fahrzeugen ist weiters bekannt, eine Absicherung vor "durchlaufenden Zapfpistolen" vorzusehen, also eine Überlaufsicherung die das Schließen einer Verbindung des Tanks sicherstellt, wenn der Kraftstoff im Tank über ein vorbestimmtes Niveau ansteigt.

Die DE 41 21 324 A1, in der die Merkmale des Oberbegriffs von Anspruch 1 enthalten sind, offenbart einen Kraftstoffbehälter für ein Kraftfahrzeug, mit einer Entlüftungsleitung, die ein Oberteil eines Einfüllrohres mit dem Kraftstoffbehälter verbindet, mit einer in die Umgebung oder zu einem Aktivkohlefilter oder dergleichen führenden Entlüftungsleitung für die aus dem Kraftstoffbehälter strömenden Gase bzw. Dämpfe und mit einem Ausgleichsvolumen, das oberhalb des Kraftstoffbehälters und unterhalb einer Füllstandshöhe angeordnet ist, die sich bei maximaler Betankung im Einfüllrohr-Oberteil ergibt, wobei ein Schwimmerventil oberhalb des Ausgleichsvolumens vorgesehen ist, wobei durch das Schwimmerventil eine Verbindung zwischen dem Ausgleichsvolumen und der Umgebung ab einem bestimmten Volumen des im Kraftstoffbehälter befindlichen Kraftstoffes herstellbar ist und wobei durch das Schwimmerventil diese Verbindung während des Betankungsvorganges verschlossen ist.

Aus der US 6 302 133 B1, in der ebenfalls die Merkmale des Oberbegriffs von Anspruch 1 enthalten sind, ist ein Kraftstofftank bekannt, der einen Hauptkörper umfasst, ein Einfüllrohr das mit dem Hauptkörper in Verbindung steht, sowie ein erstes Entlastungsventil, das geöffnet werden kann, um das Innere des Einfüllrohres mit der Atmosphäre zu verbinden, wenn der Innendruck des Einfüllrohres einen ersten vorgegebenen Wert überschreitet, sowie mit einem zweiten Entlastungsventil, das geöffnet werden kann, um das Innere des Einfüllrohres mit einer Kraftstoffeinfüllöffnung zu verbinden, wenn der Innendruck des Einfüllrohres einen vorgegebenen zweiten Wert überschreitet.

### Zusammenfassung der Erfindung

Es ist eine Aufgabe der Erfindung, ein alternatives Entlüftungsventil und eine Tankvorrichtung umfassend ein solches Entlüftungsventil anzugeben, dass sowohl eine Roll-Over-Funktion als auch eine Überlaufsicherungsfunktion erfüllt.
Die Lösung der Aufgabe erfolgt durch ein Entlüftungsventil für einen Kraftstoffbehälter gemäß Anspruch 1. Erfindungsgemäß sind in einem Entlüftungsventil daher zwei verschiedene Verschlusskörper mit jeweils zugeordneten Ventilsitzen vorgesehen. Dabei bedeutet erfindungsgemäß "hohe Dichte" eine Dichte die größer ist als die Dichte des vorgesehenen Kraftstoffes im Tank, so dass der Verschlusskörper hoher Dichte durch Schwerkraft im Kraftstoff nach unten sinkt und "niedrige Dichte" eine Dichte die geringer ist als die Dichte des vorgesehenen Kraftstoffes im Tank, so dass der Verschlusskörper niedriger Dichte im Kraftstoff aufsteigt.

Das Entlüftungsventil weist erfindungsgemäß eine erste Kammer auf, die mit dem Entlüftungsausgang und mit der Einfüllstutzenöffnung strömungsverbunden ist und eine zweite Kammer, die mit dem Entlüftungseingang und mit der Einfüllstutzenöffnung strömungsverbunden ist. Die beiden Kammern sind miteinander nicht direkt strömungsverbunden, sondern nur über den Einfüllstutzen. Die Strömungsverbindung muss dabei jeweils nur in einem Normalbetrieb bestehen, in welchem die beiden Verschlusskörper nicht auf ihren Dichtsitzen sitzen und somit Verbindungen schließen.

Erfindungsgemäß wird daher in einer üblichen Einbaulage des Entlüftungsventils der erste Verschlusskörper, der eine niedrige Dichte aufweist, bei Anstieg eines Kraftstoffes über das Niveau des ersten Verschlusskörpers gegen den ersten Dichtsitz oberhalb des ersten Verschlusskörpers gedrückt und daher der erste Dichtsitz bei Überlauf verschlossen. Der zweiten Verschlusskörper, hoher Dichte, liegt in einem Normalbetrieb unterhalb des zweiten Dichtsitzes und fällt beispielsweise bei einer Überkopflage auf den zweiten Dichtsitz, so dass der zweite Dichtsitz im Fall ausreichender Schräglage oder Überkopflage verschlossen wird.

Die beiden genannten Funktionen sind somit in einem einzigen Bauteil integriert, jedoch können durch getrennte Verschlusskörper und Dichtsitze beide Funktionen ungestört voneinander zuverlässig verrichtet werden.

Weiterbildungen der Erfindung sind in den abhängigen Ansprüchen, der Beschreibung sowie den beigefügten Zeichnungen angegeben.

Bevorzugt ist der erste Verschlusskörper in Einbaulage des Entlüftungsventils niedriger angeordnet als der zweite Verschlusskörper, insbesondere im Bereich der Einfüllstutzenöffnung. Hierdurch kann der erste Dichtsitz bei steigendem Kraftstoff rasch geschlossen werden.

Der erste Verschlusskörper, der erste Dichtsitz, der zweite Verschlusskörper und der zweite Dichtsitz sind dann vorzugsweise in oder an der ersten Kammer angeordnet. "An" der Kammer bedeutet dabei eine Anordnung im Bereich der Begrenzungen der Kammer, insbesondere an einem axialen Ende der Kammer.

Bevorzugt sitzt der erste Verschlusskörper und/oder der zweite Verschlusskörper in Einbaulage im Normalbetrieb auf einer gasdurchlässigen und bevorzugt auch fluiddurchlässigen Struktur auf, insbesondere auf Rippen, so dass Luft bzw. Kraftstoff den jeweiligen Verschlusskörper passieren kann.

Vorzugsweise ist der erste Verschlusskörper und/oder der zweite Verschlusskörper als Kugel ausgebildet, besonders bevorzugt sind beide Verschlusskörper Kugeln.

Der erste Verschlusskörper kann in einer Klappe ausgebildet sein.

Vorzugsweise ist die Klappe an der Einfüllstutzenöffnung angeordnet und liegt in einem geschlossenen Zustand an der Außenseite der Einfüllstutzenöffnung an. Die Klappe kann so durch das Einführen einer Zapfpistole in den Einfüllstutzen nach oben gedrückt werden, sodass eine Abdichtung an der Einfüllstutzenöffnung erfolgt.

Das Entlüftungsventil kann vorzugsweise als Ventilnippel ausgebildet sein.

Eine erfindungsgemäße Tankvorrichtung umfasst einen Kraftstofftank, einen Einfüllstutzen zur Befüllung des Kraftstofftanks, eine mit dem Kraftstofftank verbundene Entlüftungsleitung, sowie ein Entlüftungsventil wie oben beschrieben, wobei der Entlüftungseingang mit der Entlüftungsleitung des Kraftstofftanks verbunden ist, der Entlüftungsausgang, bevorzugt über ein Aktivkohlefilter, mit der Umgebung verbunden ist und die Einfüllstutzenöffnung mit dem Einfüllstutzen des Kraftstoffbehälters verbunden ist.

### Kurzbeschreibung der Zeichnungen

Die Erfindung wird im Folgenden beispielhaft unter Bezugnahme auf die Zeichnungen beschrieben.
- Fig. 1: stellt eine Ausführungsform eines erfindungsgemäßen Entlüftungsventils in einer schematischen Schnittansicht von vorne dar.
- Fig. 2: stellt das Entlüftungsventil der Fig. 1 in einer Schnittdarstellung von oben dar.
- Fig. 3: stellt eine Ausführungsform eines nichterfindungsgemäßen Entlüftungsventils in einer schematischen Schnittansicht von vorne dar.
- Fig. 4: stellt das Entlüftungsventil der Fig. 3 in einer Schnittdarstellung von oben dar.

### Detaillierte Beschreibung der Erfindung

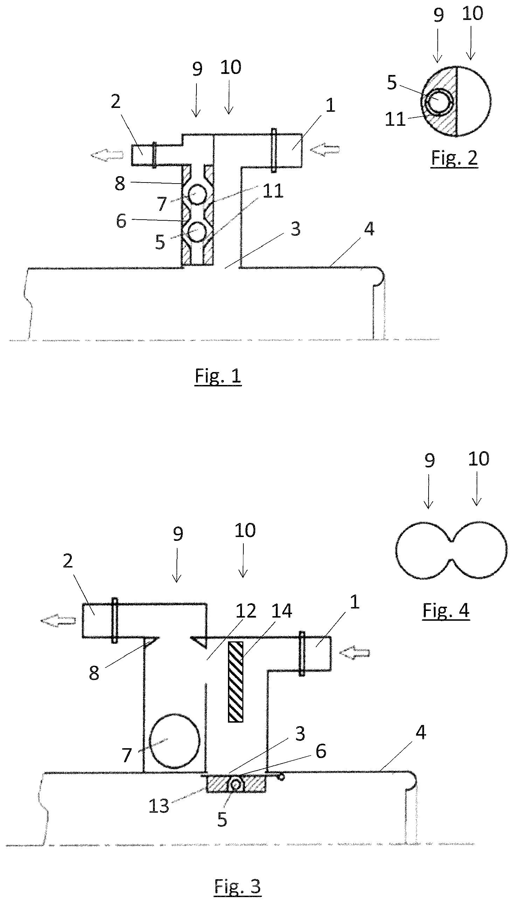

In Fig. 1 ist eine Ausführungsform eines erfindungsgemäßen Entlüftungsventils bzw. ein Ausschnitt einer erfindungsgemäßen Tankvorrichtung mit einem solchen Entlüftungsventil in einer schematischen Schnittansicht von vorne dargestellt.

Das Entlüftungsventil ist als Ventilnippel ausgebildet und weist einen Entlüftungseingang 1 auf der mit einer Entlüftungsleitung des Kraftstofftanks verbindbar oder verbunden ist, einen Entlüftungsausgang 2, der mit einem Aktivkohlefilter und danach mit der Umgebung verbindbar oder verbunden ist, sowie eine Einfüllstutzenöffnung 3 die mit einem Einfüllstutzen 4 des Kraftstoffbehälters verbunden ist.

Das Entlüftungsventil ist in zwei Kammern geteilt und weist somit eine erste Kammer 9 auf, die mit dem Entlüftungsausgang 2 und mit der Einfüllstutzenöffnung 3 und somit dem Einfüllstutzen 4 strömungsverbunden ist und eine zweite Kammer 10, die mit dem Entlüftungseingang 1 und mit der Einfüllstutzenöffnung 3 und somit dem Einfüllstutzen 4 strömungsverbunden ist. Die erste Kammer 9 ist nicht mit der zweiten Kammer 10 direkt strömungsverbunden, sondern lediglich über den Einfüllstutzen 4. Durch die räumliche Trennung von erster Kammer (9) und zweiter Kammer (10) ergibt sich eine Abscheidefunktion, welche wie eine Schottwand wirkt.

Das Entlüftungsventil umfasst einen ersten Verschlusskörper 5 mit niedriger Dichte, der im Normalbetrieb auf Rippen 11 aufliegt. Über dem ersten Verschlusskörper 5 ist ein erster Dichtsitz 6 für den ersten Verschlusskörper 5 ausgebildet. Ein zweiter Verschlusskörper 7, mit hoher Dichte, liegt über dem ersten Verschlusskörper 5 und dem ersten Dichtsitz 6 in der ersten Kammer 9 ebenfalls auf Rippen 11 auf. Ein vom ersten Dichtsitz 6 verschiedener zweiter Dichtsitz 8 für den zweiten Verschlusskörper 7 ist über dem zweiten Verschlusskörper 7 ausgebildet.

Die Fig. 2 zeigt das Entlüftungsventil der Fig. 1 in einer Schnittdarstellung durch den ersten Verschlusskörper 5. Das dargestellte Entlüftungsventil ist als Zylinder mit einem bevorzugt runden Querschnitt ausgebildet und in der Mitte durch eine ebene Trennwand geteilt, so dass die erste und zweite Kammer 9 und 10 einen halbkreisförmigen Querschnitt aufweisen.

In der in Fig. 3 dargestellten nicht-erfindungsgemäßen Ausführungsform weist das Entlüftungsventil eine erste Kammer 9 auf die mit dem Entlüftungsausgang 2 strömungsverbunden ist und eine zweite Kammer 10, die mit dem Entlüftungseingang 1 und mit der Einfüllstutzenöffnung 3 und damit dem Einfüllstutzen 4 strömungsverbunden ist. Die erste Kammer 9 ist über eine Durchtrittsöffnung 12 mit der zweiten Kammer 10 strömungsverbunden, wobei die Durchtrittsöffnung 12 in Einbaulage unterhalb des zweiten Dichtsitzes 8 und oberhalb des zweiten Verschlusskörpers 7 ausgebildet ist.

Der erste Verschlusskörper 5 und der erste Dichtsitz 6 sind in oder an der zweiten Kammer 10 angeordnet und der zweite Verschlusskörper 7 und der zweite Dichtsitz 8 sind in der ersten Kammer 9 angeordnet.

Der zweite Verschlusskörper 7 ist auch in dieser Ausführungsform als Kugel ausgebildet. Möglich wäre beispielsweise auch ein Kegel als zweiter Verschlusskörper 7.

Der erste Verschlusskörper 5 ist als Kugel ausgebildet und in eine Klappe 13 integriert, wobei auch die integrierte Kugel 5 eine niedrige Dichte aufweist. Die Klappe 13 ist an der Einfüllstutzenöffnung 3 angeordnet und kann durch das Einführen einer Zapfpistole nach oben gedrückt werden, sodass eine Abdichtung erfolgen kann. Der erste Verschlusskörper 5 in der Klappe 13 kann auf Kraftstoff aufschwimmen, um am ersten Dichtsitz 6 anzuliegen und somit den Zugang vom Einfüllstutzen 4 zur zweiten Kammer 10 dicht zu schließen.

Die Verwendung von Kugeln, Kegeln oder auch Klappen als Verschlusskörper ist nicht auf die dargestellten Ausführungsformen beschränkt. Generell ist für beide Verschlusskörper in jeder Ausbildung der Kammern die Verwendung von Kugeln, Klappen und anderen Dichtkörpern, wie beispielsweise Kegeln, möglich. So könnte beispielsweise auch in der Ausführungsform der Fig. 1 ein Kegel als erster Verschlusskörper 5 verwendet werden.

In Fig. 3 ist in der zweiten Kammer 10 eine Abscheidewand oder auch eine Zyklongeometrie oder beliebige andere Abscheidegeometrie 14 integriert, um Flüssigkeitströpfchen vom Gas (Betankungsentlüftung, kommend von Entlüftungseingang 1) abzuscheiden.

Fig. 4 zeigt schließlich eine Schnittdarstellung des Entlüftungsventils der Fig. 3. Die beiden Kammern 9 und 10 sind jeweils im Wesentlichen mit rundem Querschnitt ausgebildet.

### Bezugszeichenliste

- 1: Entlüftungseingang
- 2: Entlüftungsausgang
- 3: Einfüllstutzenöffnung
- 4: Einfüllstutzen
- 5: erster Verschlusskörper
- 6: erster Dichtsitz
- 7: zweiter Verschlusskörper
- 8: zweiter Dichtsitz
- 9: erste Kammer
- 10: zweite Kammer
- 11: Rippen
- 12: Durchtrittsöffnung
- 13: Klappe
- 14: Abscheidegeometrie

## Patentansprüche

1. Entlüftungsventil für einen Kraftstoffbehälter, umfassend einen Entlüftungseingang (1) der mit einer Entlüftungsleitung des Kraftstofftanks verbindbar ist, einen Entlüftungsausgang (2) der mit der Umgebung verbindbar ist und eine Einfüllstutzenöffnung (3) die mit einem Einfüllstutzen (4) des Kraftstoffbehälters verbindbar ist, wobei das Entlüftungsventil einen ersten Verschlusskörper (5) niedriger Dichte umfasst, nämlich mit einer Dichte die geringer ist, als die Dichte des vorgesehenen Kraftstoffes, einen ersten Dichtsitz (6) für den ersten Verschlusskörper (5), einen zweiten Verschlusskörper (7) hoher Dichte, nämlich mit einer Dichte die größer ist, als die Dichte des vorgesehenen Kraftstoffes, sowie einen vom ersten Dichtsitz (6) verschiedenen zweiten Dichtsitz (8) für den zweiten Verschlusskörper (7), wobei in Einbaulage der erste Dichtsitz (6) oberhalb des ersten Verschlusskörpers (5) und der zweite Dichtsitz (8) oberhalb des zweiten Verschlusskörpers (7) angeordnet ist, **dadurch gekennzeichnet, dass** das Entlüftungsventil eine erste Kammer (9) aufweist, die mit dem Entlüftungsausgang (2) und mit der Einfüllstutzenöffnung (3) strömungsverbunden ist und eine zweite Kammer (10) aufweist, die mit dem Entlüftungseingang (1) und mit der Einfüllstutzenöffnung (3) strömungsverbunden ist, wobei die erste Kammer (9) nicht mit der zweiten Kammer (10) direkt strömungsverbunden ist, sondern lediglich über den Einfüllstutzen (4).

2. Entlüftungsventil nach Anspruch 1,
**dadurch gekennzeichnet, dass** der erste Verschlusskörper (5) in Einbaulage niedriger angeordnet ist als der zweite Verschlusskörper (7), wobei der erste Verschlusskörper (5) insbesondere im Bereich der Einfüllstutzenöffnung (3) angeordnet ist.

3. Entlüftungsventil nach Anspruch 1,
**dadurch gekennzeichnet, dass** der erste Verschlusskörper (5), der erste Dichtsitz (6), der zweite Verschlusskörper (7) und der zweite Dichtsitz (8) in oder an der ersten Kammer (9) angeordnet sind.

4. Entlüftungsventil nach Anspruch 3,
**dadurch gekennzeichnet, dass** der erste Verschlusskörper (5) und/oder der zweite Verschlusskörper (7) in Einbaulage im Normalbetrieb auf einer gasdurchlässigen und bevorzugt auch fluiddurchlässigen Struktur aufsitzt, insbesondere auf Rippen (11).

5. Entlüftungsventil nach zumindest einem der vorhergehenden Ansprüche,
**dadurch gekennzeichnet, dass** der erste Verschlusskörper (5) und/oder der zweite Verschlusskörper (7) als Kugel ausgebildet ist.

6. Entlüftungsventil nach zumindest einem der vorhergehenden Ansprüche,
**dadurch gekennzeichnet, dass** der erste Verschlusskörper (5) in einer Klappe (13) ausgebildet ist.

7. Entlüftungsventil nach Anspruch 6,
**dadurch gekennzeichnet, dass** die Klappe (13) an der Einfüllstutzenöffnung (3) angeordnet ist und in einem geschlossenen Zustand an der Außenseite der Einfüllstutzenöffnung (3) anliegt.

8. Entlüftungsventil nach zumindest einem der vorhergehenden Ansprüche,
**dadurch gekennzeichnet, dass** das Entlüftungsventil als Ventilnippel ausgebildet ist.

9. Tankvorrichtung umfassend einen Kraftstofftank, einen Einfüllstutzen (4) zur Befüllung des Kraftstofftanks, eine mit dem Kraftstofftank verbundene Entlüftungsleitung, sowie ein Entlüftungsventil nach zumindest einem der vorhergehenden Ansprüche, wobei der Entlüftungseingang (1) mit der Entlüftungsleitung des Kraftstofftanks verbunden ist, der Entlüftungsausgang (2), bevorzugt über ein Aktivkohlefilter, mit der Umgebung verbunden ist und die Einfüllstutzenöffnung (3) mit dem Einfüllstutzen (4) des Kraftstoffbehälters verbunden ist.

## Claims

1. Ventilation valve for a fuel tank, comprising a ventilation inlet (1) which is able to be connected to a ventilation line of the fuel tank, a ventilation outlet (2) which is able to be connected to the surroundings and a filler neck opening (3) which is able to be connected to a filler neck (4) of the fuel tank, whereby the ventilation valve comprises a first closure body (5) of low density, that is of a density which is lower than the density of the fuel foreseen, a first sealing seat (6) for the first closure body (5), a second closure body (7) of high density, that is of a density which is greater than the density of the fuel foreseen, as well as a second sealing seat (8) for the second closure body (7) which is different from the first sealing seat (6), wherein in the installed position the first sealing seat (6) is arranged above the first closure body (5) and the second sealing seat (8) is arranged above the second closure body (7), **characterized in that** the ventilation valve comprises a first chamber (9) which is in fluidic connection with the ventilation outlet (2) and with the filler neck opening (3) and comprises a second chamber (10) which is in fluidic connection with the ventilation inlet (1) and with the filler neck opening (3), wherein the first chamber (9) is not in direct fluidic connection with the second chamber (10), but only via the filler neck (4).

2. Ventilation valve according to Claim 1, **characterized in that** in the installed position the first closure body (5) is arranged at a lower level than the second closure body (7), wherein the first closure body (5) is arranged, in particular, in the region of the filler neck opening (3).

3. Ventilation valve according to Claim 1, **characterized in that** the first closure body (5), the first sealing seat (6), the second closure body (7) and the second sealing seat (8) are arranged in or on the first chamber (9).

4. Ventilation valve according to Claim 3, **characterized in that** in the installed position in normal operation the first closure body (5) and/or the second closure body (7) is positioned on a gas-permeable and preferably also liquid-permeable structure, in particular on ribs (11).

5. Ventilation valve according to at least one of the preceding claims, **characterized in that** the first closure body (5) and/or the second closure body (7) is configured as a ball.

6. Ventilation valve according to at least one of the preceding claims, **characterized in that** the first closure body (5) is configured in a flap (13).

7. Ventilation valve according to Claim 11, **characterized in that** the flap (13) is arranged on the filler neck opening (3) and in a closed state bears against the outer face of the filler neck opening (3).

8. Ventilation valve according to at least one of the preceding claims, **characterized in that** the ventilation valve is configured as a valve nipple.

9. Tank device comprising a fuel tank, a filler neck (4) for filling the fuel tank, a ventilation line connected to the fuel tank, as well as a ventilation valve according to at least one of the preceding claims, wherein the ventilation inlet (1) is connected to the ventilation line of the fuel tank, the ventilation outlet (2) is connected to the surroundings, preferably via an active carbon filter, and the filler neck opening (3) is connected to the filler neck (4) of the fuel tank.

## Revendications

1. Soupape de ventilation pour un réservoir de carburant, comprenant une entrée de ventilation (1) qui peut être raccordée à une conduite de ventilation du réservoir de carburant, une sortie de ventilation (2) qui peut être raccordée à l'atmosphère et une ouverture de tubulure de remplissage (3) qui peut être raccordée à une tubulure de remplissage (4) du réservoir de carburant, dans laquelle la soupape de ventilation comprend un premier corps de fermeture (5) de faible densité, à savoir avec une densité qui est inférieure à la densité du carburant prévu, un premier siège d'étanchéité (6) pour le premier corps de fermeture (5), un second corps de fermeture (7) de haute densité, à savoir avec une densité qui est supérieure à la densité du carburant prévu, ainsi qu'un second siège d'étanchéité (8) différent du premier siège d'étanchéité 6) pour le second corps de fermeture (7), dans lequel en position de montage le premier siège d'étanchéité (6) est disposé au-dessus du premier corps de fermeture (5) et le second siège d'étanchéité (8) est disposé au-dessus du second corps de fermeture (7), **caractérisée en ce que** la soupape de ventilation présente une première chambre (9), qui est en communication d'écoulement avec la sortie de ventilation (2) et avec l'ouverture de la tubulure de remplissage (3) et présente une seconde chambre (10), qui est en communication d'écoulement avec l'entrée de ventilation (1) et avec l'ouverture de la tubulure de remplissage (3), dans laquelle la première chambre (9) n'est pas directement en communication d'écoulement avec la seconde chambre (10), mais uniquement par l'intermédiaire de la tubulure de remplissage (4).

2. Soupape de ventilation selon la revendication 1, **caractérisée en ce que** le premier corps de fermeture (5) est en position de montage disposé plus bas que le second corps de fermeture (7), dans laquelle le premier corps de fermeture (5) est disposé en particulier dans la région de l'ouverture de la tubulure de remplissage (3).

3. Soupape de ventilation selon la revendication 1, **caractérisée en ce que** le premier corps de fermeture (5), le premier siège d'étanchéité (6), le second corps de fermeture (7) et le second siège d'étanchéité (8) sont disposés dans ou sur la première chambre (9).

4. Soupape de ventilation selon la revendication 3, **caractérisée en ce que** le premier corps de fermeture (5) et/ou le second corps de fermeture (7) en position de montage s'applique en fonctionnement normal sur une structure perméable au gaz et de préférence aussi perméable au liquide, en particulier sur des nervures (11).

5. Soupape de ventilation selon au moins une des revendications précédentes, **caractérisée en ce que** le premier corps de fermeture (5) et/ou le second corps de fermeture (7) sont réalisés en forme de billes.

6. Soupape de ventilation selon au moins une des revendications précédentes, **caractérisée en ce que** le premier corps de fermeture (5) est formé dans un clapet (13).

7. Soupape de ventilation selon la revendication 6, **caractérisée en ce que** le clapet (13) est disposé à l'ouverture de la tubulure de remplissage (3) et s'applique dans un état fermé sur le côté extérieur de l'ouverture de la tubulure de remplissage (3).

8. Soupape de ventilation selon au moins une des revendications précédentes, **caractérisée en ce que** la soupape de ventilation est réalisée sous forme de nipple de soupape.

9. Dispositif de réservoir comprenant un réservoir de carburant, une tubulure de remplissage (4) pour le remplissage du réservoir de carburant, une conduite de ventilation raccordée au réservoir de carburant, ainsi qu'une soupape de ventilation selon au moins une des revendications précédentes, dans lequel l'entrée de ventilation (1) est raccordée à la conduite de ventilation du réservoir de carburant, la sortie de ventilation (2) est raccordée à l'atmosphère, de préférence par l'intermédiaire d'un filtre à charbon actif, et l'ouverture de la tubulure de remplissage (3) est raccordée à la tubulure de remplissage (4) du réservoir de carburant.
